**Europäisches Patentamt**

**European Patent Office**

**Office européen des brevets**

(19)

(11) Veröffentlichungsnummer: **0 300 322 B1**

(12) **EUROPÄISCHE PATENTSCHRIFT**

(45) Veröffentlichungstag der Patentschrift:
07.11.90

(51) Int. Cl.⁵: **B62D 33/06**

(21) Anmeldenummer: 88111078.7

(22) Anmeldetag: 12.07.88

(54) LKW-Fahrerhaus mit hinter dem Fahrersitz vorgesehenem Stauraum.

(30) Priorität: 21.07.87 DE 3724060

(43) Veröffentlichungstag der Anmeldung:
25.01.89 Patentblatt 89/4

(45) Bekanntmachung des Hinweises auf die Patenterteilung:
07.11.90 Patentblatt 90/45

(84) Benannte Vertragsstaaten:
DE FR GB NL SE

(56) Entgegenhaltungen:
DE-A- 1 630 267
DE-A- 2 617 941
DE-A- 3 514 036
US-A- 4 480 867

M.A.N. FORSCHEN, PLANEN, BAUEN, Nr 11, April 1980,
Seiten 54 - 59, Augsburg, DE; W. SCHMIDT
:"Vario-System- ein neues Konzept für Nutzfahrzeuge"

(73) Patentinhaber: Iveco Magirus Aktiengesellschaft,
Schillerstrasse 2 Postfach 27 40, D-7900 Ulm/Donau(DE)

(72) Erfinder: Egle, Elmar, Ing.grad.,
Sebastian-Fischer-Weg 32, D-7900 Ulm(DE)
Erfinder: Kraus, Ulrich, Dipl.-Ind.Des.,
Lichtensteinstrasse 3, D-7900 Ulm(DE)

(74) Vertreter: Socha, Peter, Iveco Magirus AG
Postfach 2740 Schillerstrasse 2, D-7900 Ulm(DE)

## Beschreibung

Die Erfindung betrifft ein Lastkraftwagen-Fahrerhaus mit hinter dem Fahrersitz vorgesehenem Stauraum zur Aufnahme von Campingeinbauten in Form von auswechselbaren Bausteinen.

Gemäß DE-PS 29 36 710 ist ein Lastkraftwagen-Fahrerhaus mit hinter dem Fahrersitz vorgesehenem Stauraum zur Aufnahme von Campingeinbauten der eingangs genannten Art bekannt, welche jeweils selbständige komplette Einheiten bilden und in ihrer Außenkontur gegeneinander angepaßt sind. Von Nachteil hierbei ist, daß für einen Austausch einzelner Komponenten die einzelnen Campingbauteile ebenfalls in ihrer Außenkontur gegeneinander angepaßt sein müssen, was mit einem erhöhten Aufwand und einer Verringerung der Flexibilität hinsichtlich der Auswechselbarkeit einzelner Campingeinbauten einhergeht.

Aufbauend auf dem vorgenannten Stand der Technik ist es Aufgabe der Erfindung, ein Lastkraftwagen-Fahrerhaus der eingangs genannten Art zu schaffen, welches vorgenannte Nachteile beseitigt und insbesondere mit Hilfe einfacher Mittel einen Stauraum zur Aufnahme von auswechselbaren Campingeinbauten schafft, welcher auf vielfache Weise für unterschiedliche Zwecke funktionsgerecht genutzt werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Ansprüche 2 bis 11.

Wesen der Erfindung ist mithin ein Stauraum hinter dem Fahrer- und Beifahrersitz, der durch eine gegebenenfalls erhöhte untere Querliege oberseitig abgeschlossen wird, wobei unter der Querliege einzelne Abteile durch im wesentlichen vertikal angeordnete Steckwände ausgebildet sind, welche in ausgewählten fahrerhausfesten Steckaufnahmen befestigt werden können. Dadurch können die einzelnen Abteile individuellen Camping-Bausteinen in vielfacher funktionsgerechter Variante angepaßt werden.

Vorzugsweise ist eine hochklappbare Querliege durch zumindest eine Feder in Richtung der im wesentlichen hochgeklappten Stellung vorgespannt und in letztgenannter Stellung feststellbar.

Die Feder ist zweckmäßigerweise eine Gasfeder.

An der Unterseite der hochklappbaren Querliege können weitere Campingeinbauten befestigt sein, wie z.B. ein Spiegel, eine Spiegelleuchte, Hängetaschen, in eine Horizontallage herunterklappbare Ablagen wie Toilettenartikelablage, Arbeitstisch, etc..

Im mittleren Bereich des Stauraums befindet sich zweckmäßigerweise eine Tisch-Kocher-Kombination, deren Deckplatte in Richtung Windschutzscheibe über dem Motortunnelbereich als Tisch herausgezogen bzw. in eine Horizontallage heruntergeklappt werden kann.

Im beifahrerseitigen Bereich des Stauraums kann eine Spüle und/oder zumindest ein Wasserbehälter angeordnet sein.

Die vordere beifahrersitzseitige Vertikalwand des Stauraums ist vorteilhafterweise nach hinten versetzt ausgebildet, um bei einem Beifahrersitz, der zweckmäßigerweise um eine zentrale Hochachse um zumindest 180° nach hinten gedreht werden kann, genügend Fußraum zu verschaffen. Hierbei ist die obere Querkante der Vertikalwand näher zur Windschutzscheibe gelegen als die untere Querkante der mithin schräg angeordneten Vertikalwand.

Einem drehbaren Beifahrersitz ist zweckmäßigerweise ein Spiegel, eine Spiegelleuchte, eine Spüle und/oder eine von der Unterseite der Querliege herunterklappbare in Richtung Beifahrersitz ausziehbare Platte in Form eines Arbeitstisches zugeordnet.

Der fahrerseitige Stauraum kann vorteilhafterweise als Ablage- und/oder Kleiderfächer ausgebildet sein.

Durch die hochklappbare Querliege mit darunterliegendem Stauraum können also Funktionen des Campingmobilbaus bei einem Lastwagenfahrerhaus genutzt werden, das bisher kein hinlängliches Platzangebot hatte.

Die Erfindung wird nachfolgend anhand von Ausführungsbeispielen unter Bezugnahme auf die beigefügte Zeichnung näher beschrieben;
es zeigen:

Fig. 1 ein Fahrerhaus mit erhöhter unterer hochklappbarer Querliege als obere Abdeckung eines darunter sich befindlichen Stauraums,

Fig. 2 eine schematische Draufsicht auf den geöffneten Stauraum nach Fig. 1,

Fig. 3 eine Draufsicht auf den Stauraum ähnlich der Fig. 2 in weiterer Variante,

Fig. 4 eine perspektivische Ansicht auf den Stauraum ähnlich der Fig. 3 mit hochgeklappter unterer Querliege,

Fig. 5 eine Seitenansicht auf der Beifahrersitzseite bei hochgeklappter unterer Querliege, und

Fig. 6 eine Draufsicht auf die Ausführungsform nach Fig. 5 unter Weglassung des Beifahrersitzes.

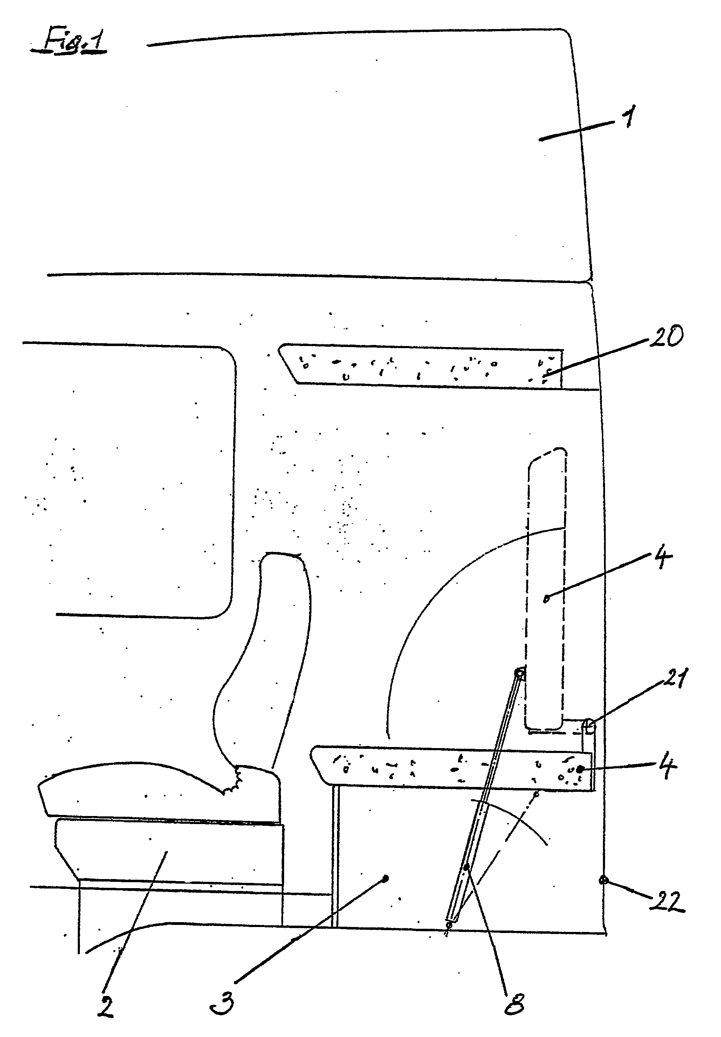

Gemäß Fig. 1 umfaßt ein Lastkraftwagen-Fahrerhaus (1) hinter dem Fahrersitz (2) und dem Beifahrersitz (17) eine obere Querliege (20) sowie eine untere Querliege (4), die sich im Vergleich zum Fahrersitz (2) bzw. Beifahrersitz in einer etwas erhöhten Stellung befindet.

Die untere Querliege (4) ist mittels Scharnieren (21) an der Rückwand (22) befestigt und kann aus einer im wesentlichen horizontalen Gebrauchsstellung um ca. 90° nach oben und nach hinten geklappt werden, wobei eine Gasfeder (8) zwischen Querliege (4) und Fahrerhaus (1) angelenkt ist, die das Hochschwenken der Querliege (4) erleichtert und auch die Querliege (4) in ihrer im wesentlichen vertikalen hochgeschwenkten Stellung arretiert.

Unter der Querliege (4) ist über die gesamte Fahrerhausbreite ein Stauraum (3) ausgebildet, der nachfolgend noch im einzelnen beschrieben ist. Die untere Querliege (4) bildet in ihrer horizontalen Stellung die obere Abdeckung des Stauraums (3), während der Stauraum (3) in der hochgeschwenkten Stellung der Querliege (4) von oben frei zugänglich ist.

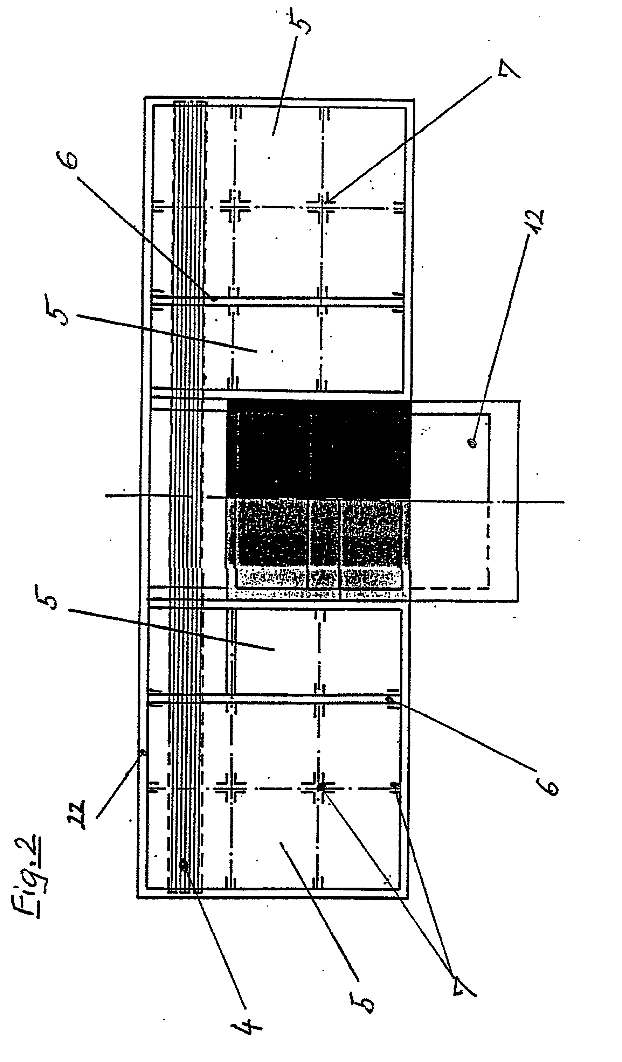

In der in Fig. 2 gezeigten Draufsicht auf den geöffneten Stauraum (3) gemäß Fig. 1 sind einzelne Abteile (5) zu erkennen, die durch im wesentlichen vertikal verlaufende Steckwände gebildet sind, welche in ausgewählten fahrerhausfesten Steckaufnahmen (7) befestigt sind. Die Steckaufnahmen (7) können beispielsweise nutenartige Führungen oder Befestigungselemente sein, wie sie aus dem Möbelbau bekannt sind. Die Steckwände (6) können Zwischenwände oder aber auch Seitenwände des Stauraums (3) sein. Durch entsprechende Versteckung der Steckwände können Abteile unterschiedlicher Größe und Lage im Stauraum (3) eingerichtet werden, die individuellen Campingeinbauten angepaßt sind, beispielsweise einer im Stauraum (3) zentral aufgenommenen Tisch-Kocher-Kombination (12) gemäß den Fig. 2 bis 4.

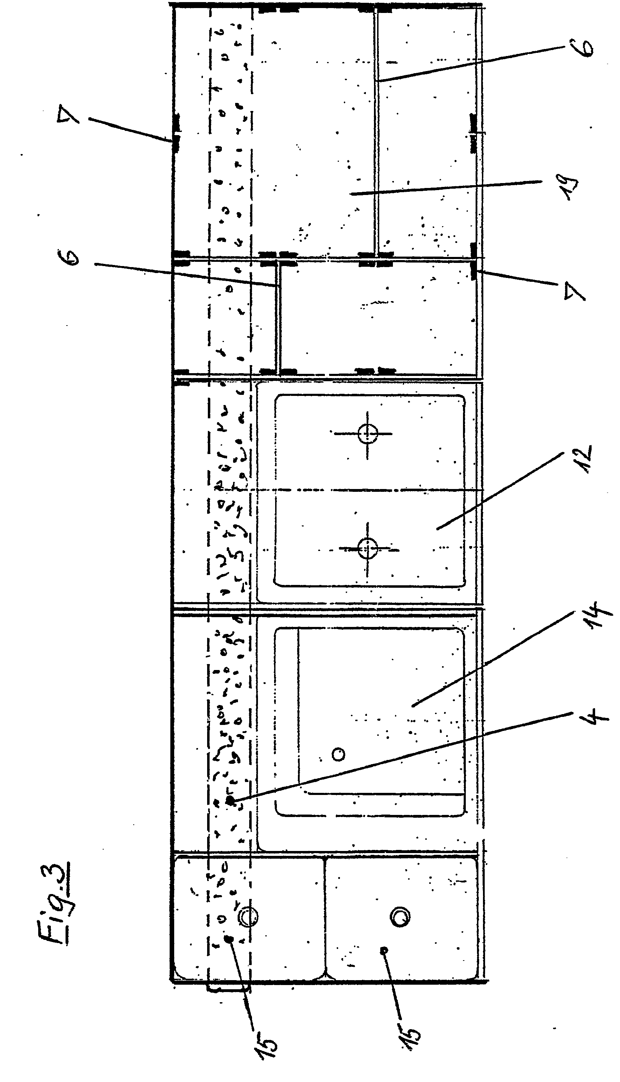

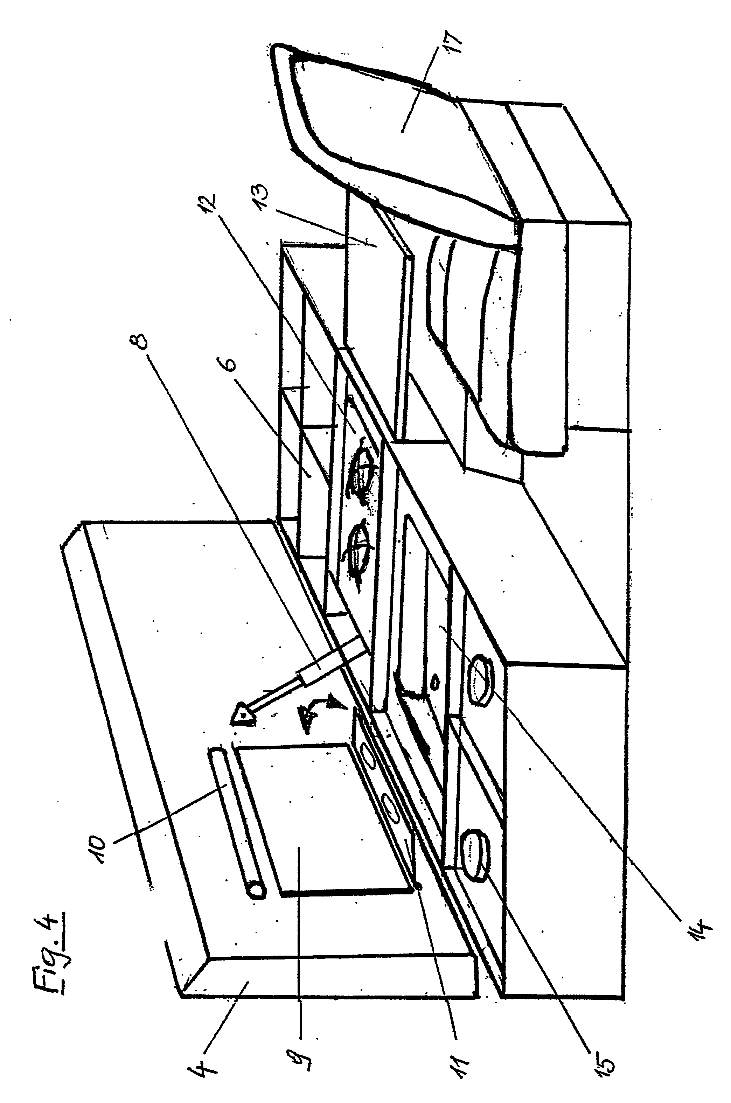

Gemäß Fig.3,4 sind einzelne Abteile (5) des Stauraums (3) neben der zentralen Tisch-Kocher-Kombination (12) mit einer Spüle (14), zwei Wasserbehältern (15) (ein Wasserbehälter für Brauchwasser, ein Wasserbehälte für Abwasser) und auf der anderen Seite der Tisch-Kocher-Kombination (12) mit Ablage- und Kleiderfächern (19) bestückt, wobei die Spüle auf der Seite des Beifahrersitzes (17) angeordnet und der Spüle ein Spiegel (9) nebst Spiegelleuchte (10) und einer Toilettenablage (11) an der Unterseite der Querliege (4) zugeordnet ist. Die Toilettenablage (11) ist hierbei mittels Scharnier an der Querliege (4) angelenkt und kann aus einer spiegeldichten Anordnung in eine im wesentlichen horizontale Lage heruntergeschwenkt werden, wenn die Querliege (4) nach oben geklappt ist und durch die Gasfeder (8) in der hochgeklappten Stellung gehalten wird. Die Gasfeder (8) befindet sich an zentraler Stelle der Querliege (4) im Bereich der Tisch-Kocher-Kombination (12).

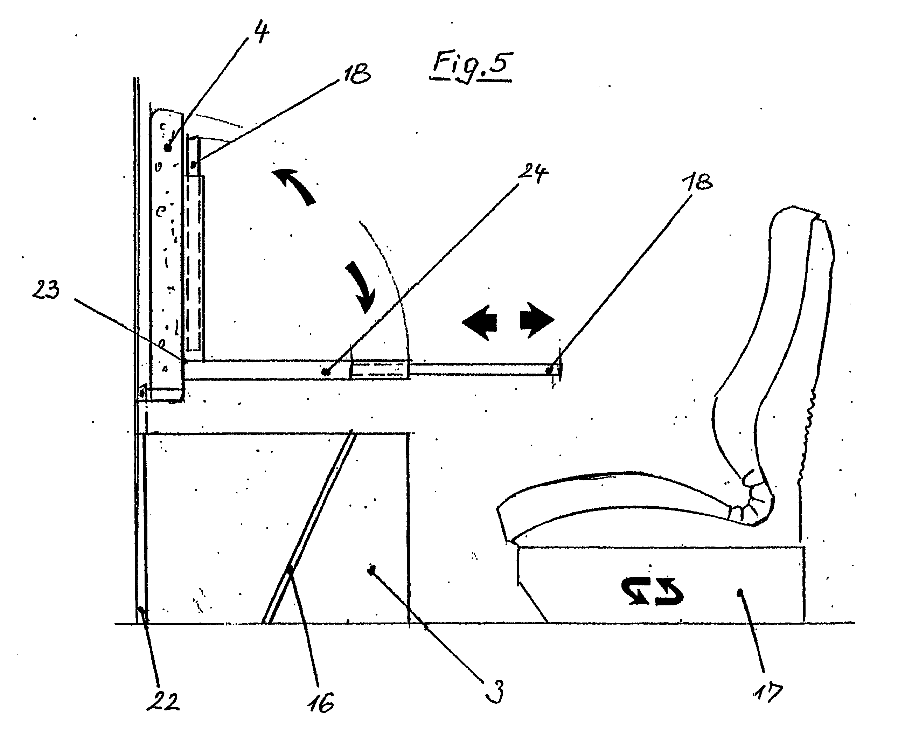

Wie in den Fig. 4 und 5 gezeigt, kann der Beifahrersitz (17) um eine im wesentlichen zentrale Hochachse um zumindest 180° nach hinten gedreht werden, so daß eine Benutzungsperson des Beifahrersitzes (17) Campingeinbauten auf der Beifahrersitzseite sowie die zentrale Tisch-Kocher-Kombination (12) funktionsgerecht bedienen bzw. benutzen kann, insbesondere auch die nach vorne ausgezogene Deckplatte (13) der Tisch-Kocher-Kombination (12), beispielsweise zum Essen.

An der Unterseite der Querliege (4) können ferner (nicht veranschaulichte) Hängetaschen beispielsweise für Lieferscheine oder Werkzeuge angeordnet werden.

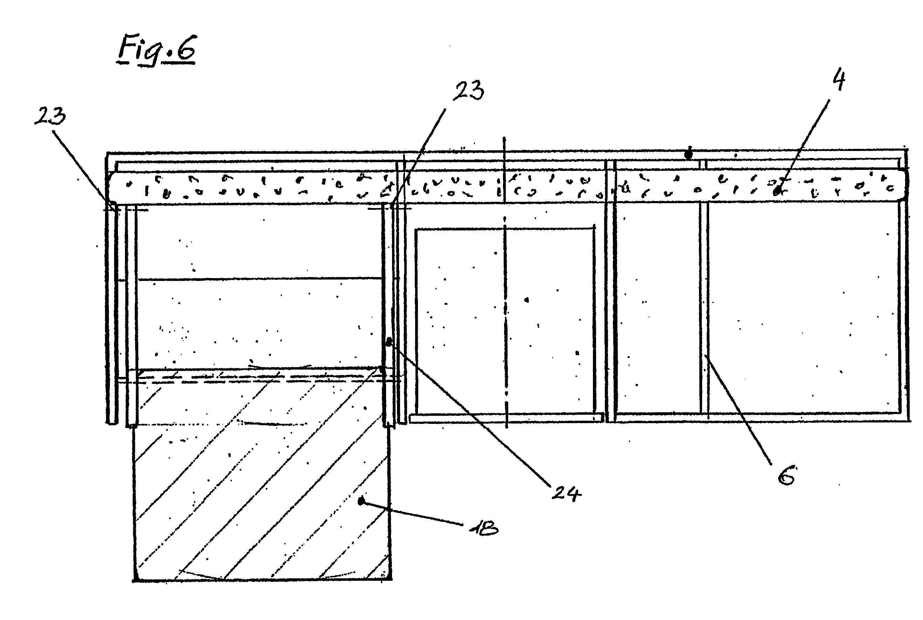

In Fig. 5 ist in schematischer Seitenansicht die Beifahrersitzseite in Form eines Arbeitsplatzes gezeigt, wobei die vordere Steckwand des Stauraums (3) als im wesentlichen schräg verlaufende Vertikalwand (16) angeordnet ist, die zudem nach hinten versetzt ist, um mehr Fußraum auf der Beifahrersitzseite zu schaffen. Anstelle des Spiegels (14) nebst Zubehörteile gemäß Fig. 4 ist nach der Ausführungsvariante nach Fig. 5 auf der Unterseite der Querliege (4) ein Arbeitstisch (18) mit Klappscharnieren (23) befestigt, wobei der Arbeitstisch durch Klappen um ca. 90° in eine Horizontallage gebracht und die Tischfläche in Führungsschienen (24) oder aber auch in Rollen geführten Tabularführungen in Richtung Beifahrersitz (17) herausgezogen und beispielsweise als Abstellfläche für eine Schreibmaschine oder als Schreibtisch verwendet werden kann, wie dies auch in einer Draufsicht in Fig. 6 veranschaulicht ist.

Alle in der Beschreibung genannten und/oder in der Zeichnung veranschaulichten Merkmale allein oder in sinnvoller Kombination sind erfindungswesentlich, auch soweit sie in den Ansprüchen nicht ausdrücklich beansprucht sind.

## Patentansprüche

1. Lastkraftwagen-Fahrerhaus (1) mit hinter dem Fahrersitz (2) vorgesehenem Stauraum (3) zur Aufnahme von Campingeinbauten in Form von auswechselbaren Bausteinen,
dadurch gekennzeichnet,
daß der Stauraum (3) durch eine hintere stabile nach hinten hochklappbare Querliege (4) mit darunter angeordneten individuell den Bausteinen anpaßbaren Abteilen (5) gebildet ist, welche Steckwände (6) besitzen, die in fahrerhausfesten Steckaufnahmen (7) befestigbar sind.

2. Lastkraftwagen-Fahrerhaus nach Anspruch 1,
dadurch gekennzeichnet,
daß die hochklappbare Querliege (4) durch zumindest eine Feder in Richtung der im wesentlichen hochge klappten Stellung vorgespannt und in dieser Stellung feststellbar ist.

3. Lastkraftwagen-Fahrerhaus nach Anspruch 2,
dadurch gekennzeichnet,
daß die Feder als Gasfeder (8) ausgebildet ist.

4. Lastkraftwagen-Fahrerhaus nach einem der Ansprüche 1 bis 3,
dadurch gekennzeichnet,
daß an der Unterseite der hochklappbaren Querliege (4) weitere Campingeinbauten (z.B. Spiegel (9), Spiegelleuchte (10), Hängetaschen, in eine Horizontallage herunterklappbare Ablagen wie beispielsweise Toilettenartikelablage (11), Arbeitstisch) befestigt sind.

5. Lastkraftwagen-Fahrerhaus nach einem der Ansprüche 1 bis 4,
dadurch gekennzeichnet,
daß im mittleren Bereich des Stauraums (3) eine Tisch-Kocher-Kombination (12) angeordnet ist, deren Deckplatte (13) in Richtung Windschutzscheibe über dem Motortunnelbereich als Tisch herausgezogen bzw. in eine Horizontallage heruntergeklappt werden kann.

6. Lastkraftwagen-Fahrerhaus nach einem der Ansprüche 1 bis 5,
dadurch gekennzeichnet,
daß im beifahrerseitigen Bereich des Stauraums (3) eine Spüle (14) und/oder zumindest ein Wasserbehälter (15) angeordnet sind.

7. Lastkraftwagen-Fahrerhaus nach einem der Ansprüche 1 bis 6,
dadurch gekennzeichnet,
daß die vordere beifahrerseitige Vertikalwand (16) des Stauraums (3) nach hinten versetzt ausgebildet ist.

8. Lastkraftwagen-Fahrerhaus nach Anspruch 7,
dadurch gekennzeichnet,
daß die Vertikalwand (16) abgewinkelt angeordnet ist, wobei die obere Querkante der Vertikalwand näher zur Windschutzscheibe gelegen ist als die untere Querkante der Vertikalwand (Fig. 5).

9. Lastkraftwagen-Fahrerhaus nach Anspruch 7,
dadurch gekennzeichnet,
daß der Beifahrersitz (17) um eine zentrale Hochachse zumindest um 180° gedreht werden kann.

10. Lastkraftwagen-Fahrerhaus nach Anspruch 9,
dadurch gekennzeichnet,
daß der drehbare Beifahrersitz (17) einem Spiegel (9), einer Spiegelleuchte (10), einer Spüle (14) oder einem von der Unterseite der Querliege (4) herunterklappbaren und in Richtung Beifahrersitz ausziehbaren Arbeitstisch (18) zugeordnet ist/sind.

11. Lastkraftwagen-Fahrerhaus nach einem der Ansprüche 1 bis 10,
dadurch gekennzeichnet,
daß der fahrerseitige Stauraum (3) als Ablage- und/oder Kleiderfächer (19) ausgebildet ist.

**Revendications**

1. Cabine de véhicule utilitaire (1) avec un compartiment d'arrimage (3) prévu derrière le siège du conducteur (2) pour recevoir des installations de camping sous forme de pièces interchangeables, caractérisée en ce que le compartiment d'arrimage (3) est constitué par une couchette transversale (4) arrière stable repliable en hauteur vers l'arrière, avec des secteurs (5) individuels disposés en-dessous, adaptables aux éléments de construction et constitués par des parois emboîtables (6) qui peuvent être fixées dans des logements solidaires de la cabine.

2. Cabine de véhicule utilitaire selon la revendication 1, caractérisé en ce que la couchette transversale repliable vers le haut (4) est mise en précontrainte par au moins un ressort en direction de la position repliée en hauteur et peut être bloquée dans cette position.

3. Cabine de véhicule utilitaire selon la revendication 2, caractérisé en ce que le ressort est réalisé en amortisseur pneumatique (8).

4. Cabine de véhicule utilitaire selon l'une des revendications 1 à 3, caractérisée en ce que sur la face inférieure de la couchette transversale repliable (4) sont installés d'autres éléments de camping (par exemple miroir (9), lampe à réflecteur (10), des sacoches accrochées, des récepteurs repliables sur le bas en position horizontale comme par exemple des tablettes pour articles de toilette (11), un table de travail).

5. Cabine de véhicule utilitaire selon l'une des revendications 1 à 4, caractérisée en ce que dans la zone centrale du compartiment d'arrimage (3) est placée une combinaison table-réchaud, dont la plaque couvercle (13) peut être extraite en direction du pare-brise, au-dessus de la zone du tunnel du moteur, pour constituer une table.

6. Cabine de véhicule utilitaire selon une des revendications 1 à 5, caractérisée en ce que dans la zone du compartiment d'arrimage (3) du côté du compagnon de route, sont placés un évier (14) et/ou au moins un réservoir d'eau (15).

7. Cabine de véhicule utilitaire selon une des revendications 1 à 6, caractérisée en ce que la paroi verticale avant (16) du compartiment d'arrimage (3) est réalisée décalée vers l'arrière.

8. Cabine de véhicule utilitaire selon la revendication 7, caractérisée en ce que la paroi verticale (16) est réalisée avec une forme angulaire telle que son arête transversale supérieure se trouve plus proche du pare-brise que son arête inférieure (figure 5).

9. Cabine de véhicule utilitaire selon la revendication 7, caractérisée en ce que le siège du compagnon de route (17) peut effectuer une rotation d'au moins 180° autour d'un axe vertical central.

10. Cabine de véhicule utilitaire selon la revendication 9, caractérisée en ce que le siège du compagnon de route (17) est/sont coordonné avec un miroir (9), une lumière à réflecteur (10), un évier (14) ou une table de travail (18) rabattable vers le bas à partir de la face de dessous de la couchette transversale (4) et peuvent être extraite en direction du siège du compagnon de route.

11. Cabine de véhicule utilitaire selon l'une des revendications 1 à 10, caractérisée en ce que le compartiment d'arrimage (3) du côté du conducteur est réalisé en cases de rangement et/ou en cases pour les habits (19).

**Claims**

1. A lorry cab (1) with a stowage space (3) provided behind the driver's seat (2), to hold camping components in the form of interchangeable elements, characterised in that the stowage space (3) is formed by a rear, stable, transverse couch (4), which can be lifted upwardly towards the rear, with compartments (5) arranged therebeneath, which are able to accomodate the elements individually, and which have insert walls (6), which are able to be secured in insert holding fixtures (7) which are fixed to the cab.

2. A lorry cab according to claim 1, characterised in that the transverse couch (4), which can be lifted upwardly, is prestressed by at least one spring in the direction of the substantially lifted position and can be secured in this position.

3. A lorry cab according to claim 3, characterised in that the spring is constructed as a gas spring (8).

4. A lorry cab according to one of claims 1 to 3, characterised in that on the underside of the transverse couch (4), which can be lifted upwardly, further camping components are attached (for example a mirror (9), a mirror light (10), hanging pockets, a work-table, holders which can be lowered down into a horizontal position, such as a toiletries holder (11)).

5. A lorry cab according to one of claims 1 to 4, characterised in that in the central region of the stowage space (3) a table/cooker combination (12) is arranged, the cover plate (13) of which can be drawn out in the direction of the windscreen as a table over the engine tunnel region, or respectively can be lowered down into a horizontal position.

6. A lorry cab according to one of claims 1 to 5, characterised in that in the region of the stowage space (3) on the passenger side, a washing basin (14) and/or at least a water container (15) is arranged.

7. A lorry cab according to one of claims 1 to 6, characterised in that the front vertical wall (16) of the stowage space (3) on the passenger side is constructed so as to be staggered towards the rear.

8. A lorry cab according to claim 7, characterised in that the vertical wall (16) is arranged so as to be slanted, wherein the upper transverse edge of the vertical wall is situated closer to the windscreen than the lower transverse edge of the vertical wall (Fig. 5).

9. A lorry cab according to claim 7, characterised in that the passenger seat (17) can be rotated about a central vertical axis through at least 180°.

10. A lorry cab according to claim 9, characterised in that the rotatable passenger seat (17) has associated therewith a mirror (9), a mirror light (10), a washing basin (14) or a work-table (18) which is able to be lowered down from the underside of the transverse couch (4) and is able to be drawn out in the direction of the passenger seat.

11. A lorry cab according to one of claims 1 to 10, characterised in that the stowage space (3) on the driver's side is constructed as storage- and/or clothes compartments (19).

Fig.1

Fig. 2

EP 0 300 322 B1

Fig.3

EP 0 300 322 B1

Fig. 4

Fig.5

Fig.6

EP 0 300 322 B1